# EUROPÄISCHE PATENTANMELDUNG

(11) **EP 1 591 324 A1**
(43) Veröffentlichungstag der Anmeldung: **02.11.2005**
(21) Anmeldenummer: 05008754.3
(22) Anmeldetag: 21.04.2005
(51) Int. Cl.: B60R 21/16

(54) **Gassack**

(30) Priorität: 27.04.2004 DE 202004006655 U
(71) Anmelder: TRW Automotive Safety Systems GmbH, 63743 Aschaffenburg (DE)
(72) Erfinder: Schütz, Dominik, 63857 Waldaschaff (DE)
(74) Vertreter: Kitzhofer, Thomas

(57) **Zusammenfassung**

Ein Gassack für ein Fahrzeuginsassen-Rückhaltesystem, mit einer Oberseite (12) und einer Unterseite (14), die entlang einer Umfangsbefestigung (20) miteinander verbunden sind weist zwei im Inneren des Gassacks (10) angeordneten Fangbandvorrichtungen (22, 24) auf, die jeweils einen Mittelteil (22a, 24a) und mehrere Endabschnitte (22c, 24c) aufweisen. Der Mittelteil (22a) der ersten Fangbandvorrichtung (22) ist mit der Oberseite (12) des Gassacks (10), der Mittelteil (24a) der zweiten Fangbandvorrichtung (24) mit der Unterseite (14) des Gassacks (10), und die Endabschnitte (22c, 24c) der Fangbandvorrichtung (22, 24) sind mit der Umfangsbefestigung (20) verbunden sind. Länge und Anordnung der Fangbandvorrichtung (22, 24) sind so abgestimmt, daß der Gassack (10) im voll aufgeblasenen Zustand im Bereich der Umfangsbefestigung (20) durch die Fangbandvorrichtungen eingeschnürt ist.

## Beschreibung

Die Erfindung betrifft einen Gassack für ein Fahrzeuginsassen-Rückhaltesystem.

Gassäcke mit einer Oberseite und einer Unterseite, die entlang einer Umfangsbefestigung miteinander verbunden sind, werden z.B. in Fahrergassackmodulen eingesetzt, bei denen der gefaltete Gassack in einem Lenkrad angeordnet ist und sich bei einem Unfall zwischen dem Fahrer und dem Lenkrad aufbläst, sie sind aber auch in anderen Bereichen im Fahrzeug verwendbar.

Um die Tiefe des Gassacks im aufgeblasenen Zustand zu begrenzen, ist es bekannt, im Inneren des Gassacks sogenannte Fangbänder anzuordnen, die die Ausdehnung des Gassacks in Richtung zu einem Fahrzeuginsassen einschränken. Diese Fangbänder sind mit den Gewebelagen der dem Insassen zugewandten Oberseite und der mit dem Einblasmund versehenen Unterseite verbunden, meist durch Nähen. Die Umfangsbefestigung ist oft ebenfalls durch eine oder mehrere, entlang des Umfangs der Unter- bzw. der Oberseite verlaufenden Nähte realisiert, kann aber z.B. auch durch eine Verklebung gebildet sein.

Ein kritischer Punkt liegt in der Belastung der Umfangsbefestigung, vor allem in dem Moment, in dem der Fahrzeuginsasse auf den Gassack trifft und sich die Belastung schlagartig erhöht. Im Fall der Verwendung einer Umfangsnaht muß vermieden werden, daß partikelhaltiges Gas austritt, falls sich die Naht aufweitet. Außerdem sind natürlich die Anforderungen an die Festigkeit der Umfangsbefestigung aufgrund der auf diese wirkenden hohen Belastungen sehr hoch.

Die Erfindung schlägt eine Verbesserung für einen oben beschriebenen Gassack vor, die die Belastung auf die Umfangsbefestigung reduziert.

Dies wird auf einem ersten Weg durch einen Gassack für ein Fahrzeuginsassen-Rückhaltesystem, mit einer Oberseite und einer Unterseite, die entlang einer Umfangsbefestigung miteinander verbunden sind, erreicht, bei dem zwei im Inneren des Gassacks angeordnete Fangbandvorrichtungen vorgesehen sind, die jeweils einen Mittelteil und mehrere Endabschnitte aufweisen, wobei der Mittelteil der ersten Fangbandvorrichtung mit der Oberseite des Gassacks, der Mittelteil des zweiten Fangbandvorrichtung mit der Unterseite des Gassacks und die Endabschnitte der Fangbandvorrichtungen mit der Umfangsbefestigung verbunden sind, wobei Länge und Anordnung der Fangbandvorrichtungen so abgestimmt sind, daß der Gassack im voll aufgeblasenen Zustand im Bereich der Umfangsbefestigung durch die Fangbandvorrichtungen eingeschnürt ist. Die Fangbandvorrichtungen nehmen einen Teil der Last auf, die auf die Außenwand des Gassacks wirkt, so daß auf die Umfangsbefestigung nicht nur eine erste Kraft wirkt, die die Ober- und die Unterseite voneinander entfernen will, sondern eine ins Innere des Gassacks wirkende zweite Kraft, die zu einer Verringerung der ersten Kraft führt.

Da die Belastung der Umfangsbefestigung durch die erste Kraft verringert wird, kommt es bei Verwendung einer Naht als Umfangbefestigung nicht zu einem Aufweiten der Nahtstiche im Gewebe, so daß die Partikelemission durch die Naht reduziert ist.

Die Herstellung der Umfangsbefestigung und die Befestigung von Fangbändem an den Wänden des Gassacks ist eine komplexe Tätigkeit, die mit hoher Genauigkeit ausgeführt werden muß. In der Regel wird der Gassack "auf links" genäht, da dann alle zu befestigenden Bauteile von außen zugänglich sind. Nach Abschluß der Näharbeiten wird der Gassack durch seinen in der Unterseite befindlichen Einblasmund umgestülpt und so "auf rechts gezogen". Diese Fertigungsmethode ist sehr arbeits- und zeitaufwendig, bietet jedoch den Vorteil, daß alle Nähte und Geweberänder im Inneren des Gassacks angeordnet sind, wodurch deren Kontakt mit dem aufprallenden Fahrzeuginsassen vermieden wird.

Beim erfindungsgemäßen Gassack läßt sich erreichen, daß im Bereich der Umfangsbefestigung eine Einbuchtung ausgebildet ist, die so tief ist, daß in radialer Richtung Bereiche der Oberseite weiter hervorstehen als die Umfangsbefestigung, da die mit der Umfangsbefestigung verbundenen Endabschnitte der Fangbandvorrichtungen die Umfangsbefestigung in Richtung des Gassackinneren ziehen. Das hat den positiven Effekt, daß der Gassack zeitsparend "auf rechts" genäht werden kann, so daß beim aufgeblasenen Gassack sowohl die Umfangsbefestigung als auch die Ränder der Oberseite und der Unterseite auf der Außenseite des Gassacks angeordnet sind. Ein Fahrzeuginsasse kann dennoch nicht mit diesen Elementen in Berührung kommen, da der Gassack in diesem Bereich aufgrund der Wirkung der Fangbandvorrichtungen so eingeschnürt ist, daß sie bei aufgeblasenem Gassack durch Bereiche der Oberseite und eventuell der Unterseite abgedeckt sind.

Die Erfindung läßt sich aber auch in "auf links" genähten und dann "auf rechts" gezogenen Gassäcken verwenden.

Ein weiteres Problem entsteht bei Gassäcken beim Auftreffen des Fahrzeuginsassen auf den Gassack. In diesem Moment wird der Gassack komprimiert, und der Innendruck erhöht sich schlagartig. Um den Innendruck zu reduzieren, können Ausströmöffnungen im Gassack vorgesehen sein, durch die ein Teil des Gases in die Umgebung entweichen kann. Ausströmöffnungen bringen jedoch andere offensichtliche Nachteile mit sich, sei es, daß sie entweder ständig geöffnet sind, so daß eine höhere Gasmenge eingeplant werden muß, oder daß komplizierte Öffnungsvorrichtungen vorgesehen sein müssen, die die Freigabe der Ausströmöffnung lastabhängig beeinflussen.

Die scherenartige Anordnung der Fangbandvorrichtungen im Inneren des erfindungsgemäßen Gassacks bewirkt jedoch, daß sich beim Auftreffen des Fahrzeuginsassen auf die Oberseite des Gassacks die laterale Ausdehnung des Gassacks in der Ebene der Umfangsbefestigung, also in radialer Richtung, vergrößert. Aufgrund der Formänderung kommt es zu einer geringeren Volumenverringerung als bei herkömmlichen Gassäcken, was Innendruckschwankungen beim Auftreffen des Fahrzeuginsassen auf den Gassack reduziert. Auf diese Weise kann die Fläche der Ausströmöffnungen reduziert oder ganz auf Ausströmöffnungen verzichtet werden.

Die gleichmäßigste Belastung der Umfangsbefestigung wird erreicht, wenn die Endabschnitte der beiden Fangbandvorrichtungen umfangsmäßig zueinander versetzt an der Umfangsbefestigung angreifen. Bevorzugt sind die Endabschnitte der Fangbandvorrichtungen mit umfangsmäßig gleichen Winkelabständen an der Umfangsbefestigung angeordnet.

Die erste und/oder die zweite Fangbandvorrichtung können jeweils einstückig ausgebildet sein, z.B. als Ausschnitte aus Gewebestücken, so daß die erste und/oder die zweite Fangbandvorrichtung jeweils aus einer Gewebelage bestehen.

Die Reduzierung der Belastung auf die Umfangsbefestigung kann auch auf eine zweite Weise erreicht werden. Hierzu ist bei einem Gassack für ein Fahrzeuginsassen-Rückhaltesystem, mit einer Oberseite und einer Unterseite, die entlang einer Umfangsbefestigung miteinander verbunden sind, ein Verstärkungselement vorgesehen, das im Bereich der Umfangsbefestigung angeordnet ist und umfangsmäßig am Gassack umläuft, wobei eine Umfangslänge des Verstärkungselements kürzer ist als die Umfangslänge der Umfangsbefestigung, so daß der Gassack im voll aufgeblasenen Zustand im Bereich der Umfangsbefestigung durch das Verstärkungselement eingeschnürt ist. Im voll aufgeblasenen Zustand, also auch in dem Moment, in dem ein Fahrzeuginsasse in den Gassack eintaucht, wird somit ein großer Teil der Belastung statt von der Umfangsbefestigung vom Verstärkungselement aufgenommen, so daß die Umfangsbefestigung entlastet ist. Die Umfangsbefestigung kann auch hier schwächer ausgeführt sein als bei herkömmlichen Gassäcken.

Im Fall der Verwendung einer Naht als Umfangsbefestigung wird auch hier eine Aufweiten der Nahtstiche und damit eine Partikelemission aus dem Gassack vermieden.

In diesem Fall ist vorzugsweise ebenfalls im Bereich der Umfangsbefestigung eine Einbuchtung ausgebildet, die so tief ist, daß in radialer Richtung Bereiche der Oberseite weiter hervorstehen als die Umfangsbefestigung. Wie oben bereits geschildert, wird durch die Einbuchtung die Umfangsbefestigung durch die Oberseite und eventuell auch die Unterseite des Gassacks abgedeckt. Wird ein "auf rechts" genähter Gassack verwendet, ist der Fahrzeuginsasse demnach vor Geweberändern oder Nähten geschützt, obwohl diese an der Außenseite des Gassacks liegen. Hierdurch kann die aufwendige Fertigung vermieden werden, den Gassack "auf links" zu nähen und dann "auf rechts" zu ziehen.

Die Erfindung kann natürlich auch für konventionell "auf links" genähte und "auf rechts" gezogene Gassäcke verwendet werden.

Das Verstärkungselement kann im Inneren des Gassacks oder an einer Außenseite des Gassacks angeordnet sein.

Bevorzugt ist das Verstärkungselement eine Schnur oder ein Band.

Weitere Merkmale und Vorteile der Erfindung gehen aus der nachfolgenden Beschreibung zweier Ausführungsbeispiele in Verbindung mit den beigefügten Zeichnungen hervor. In den Zeichnungen zeigen:
- Figur 1 eine Schnittansicht eines erfindungsgemäßen Gassacks gemäß einer ersten Ausführungsform im voll aufgeblasenen Zustand;
- Figur 2 eine Schnittansicht des Gassacks aus Figur 1 im Moment des Auftreffens eines Fahrzeuginsassen;
- Figur 3 eine Draufsicht aus den Gassack aus Figur 1, von einem Fahrzeuginsassen aus gesehen, wobei die Oberseite nicht gezeigt ist;
- Figur 4 eine Variante des Gassacks aus Figur 1 in einer Schnittansicht;
- Figur 5 eine Draufsicht auf einen erfindungsgemäßen Gassack gemäß einer zweiten Ausführungsform, von einem Fahrzeuginsassen aus gesehen, wobei die Oberseite des Gassacks nichts gezeigt ist;
- Figur 6 eine schematische Schnittansicht eines Gassackmoduls, wobei in der rechten und der linken Hälfte jeweils verschiedene Varianten eines erfindungsgemäßen Gassacks gezeigt sind; und
- Figur 7 eine weitere Variante des Gassacks aus Figur 5 in einer Schnittansicht.

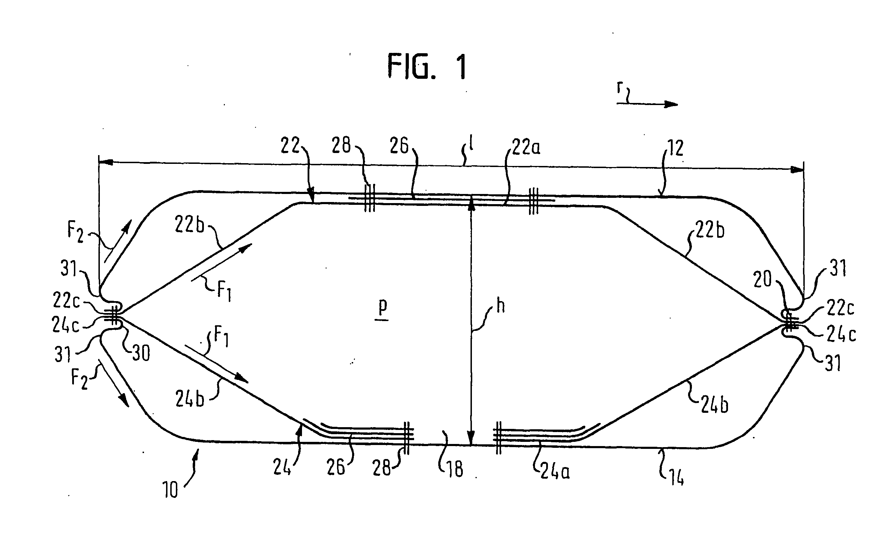

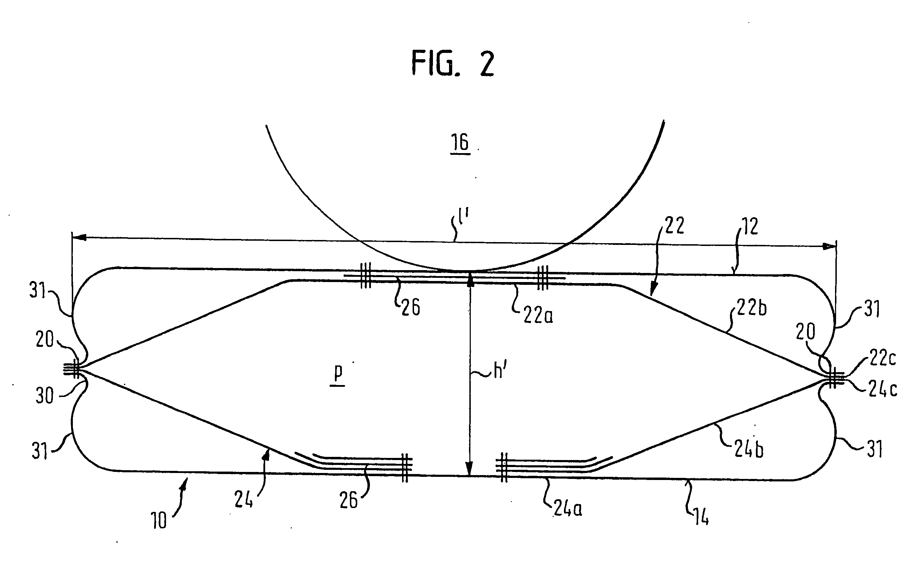

Figur 1 zeigt einen voll aufgeblasenen Gassack 10 gemäß einer ersten Ausführungsform, mit zwei im wesentlichen kreisförmigen Gewebelagen, die eine Oberseite 12 und eine Unterseite 14 des Gassacks 10 bilden. Die Oberseite 12 ist einem Fahrzeuginsassen 16 zugewandt, der in Figur 2 schematisch gezeigt ist. In der Unterseite 14 ist ein Einblasmund 18 vorgesehen, in den auf herkömmliche Weise ein hier nicht gezeigter Gasgenerator eingesetzt ist, der Teil eines Gassackmoduls ist. Die Unterseite 14 ist über das Gassackmodul an einem Fahrzeug befestigt.

Oberseite 12 und Unterseite 14 sind längs ihres Umfangsrands durch eine Umfangsbefestigung 20 verbunden. Diese Umfangsbefestigung 20 kann z.B. eine Naht, auch eine Mehrfachnaht, oder eine Verklebung sein.

Im Inneren des Gassacks 10 sind zwei jeweils einstückig aus einer Gewebelage ausgeschnittene Fangbandvorrichtungen 22, 24 angeordnet. Jede der Fangbandvorrichtungen 22, 24 hat ein Mittelteil 22a, 24a, wobei das Mittelteil 22a der ersten Fangbandvorrichtung 22 im Zentrumsbereich der Oberseite 12 und das Mittelteil 24a der zweiten Fangbandvorrichtung 24 im Zentrumsbereich der Unterseite 14 befestigt ist. Die beiden Fangbandvorrichtungen 22, 24 sind von ihrer Form im wesentlichen identisch, das Mittelteil 24a weist lediglich eine dem Einblasmund 18 entsprechende Öffnung auf.

Im Bereich der Befestigung der Mittelteile 22a, 24a der Fangbandvorrichtungen 22, 24 an der Oberseite 12 bzw. der Unterseite 14 des Gassacks 10 können jeweils eine oder mehrere Verstärkungslagen 26 vorgesehen sein. Die Befestigung erfolgt hier durch Nähte 28.

Jedes der Fangbandelemente 22, 24 weist vier symmetrisch vom Mittelteil 22a, 24a ausgehende bandförmige Arme 22b, 24b auf, die in Endabschnitten 22c, 24c enden. Die Distanz von der Mitte der Mittelteile 22a, 24a zum Ende der Endabschnitte 22c, 24c ist jeweils kürzer als der Radius der Oberseite 12 bzw. der Unterseite 14 des Gassacks 10.

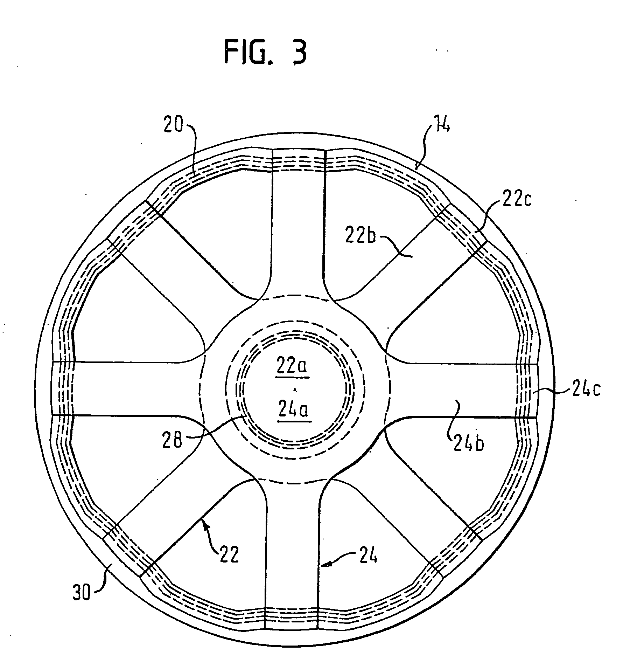

Alle Endabschnitte 22c, 24c der Fangbandvorrichtungen 22, 24 sind durch die Umfangsbefestigung 20 mit der Oberseite 12 und der Unterseite 14 des Gassacks 10 verbunden. Die erste Fangbandvorrichtung 22 und die zweite Fangbandvorrichtung 24 sind umfangsmäßig um 45° gegeneinander verdreht, wie in Figur 3 zu erkennen ist. Infolgedessen greifen die Endabschnitte 22c und die Endabschnitte 24c zueinander versetzt an der Umfangsbefestigung 20 an. Die umfangsmäßigen Winkelabstände zwischen einem Endabschnitt 22c der ersten Fangbandvorrichtung 22 und einem Endabschnitt 24c der zweiten Fangbandvorrichtung sind jeweils gleich.

Durch die Fangbandvorrichtungen 22, 24 wird die Umfangsbefestigung 20 beim Aufblasen des Gassacks 10 in Richtung des Inneren des Gassacks 10 gezogen. Im Bereich der Umfangsbefestigung bildet sich, umlaufend um den Gassack 10, eine Einbuchtung 30 aus. An den Stellen, an denen die Endabschnitte 22c, 24c an der Umfangsbefestigung 20 angreifen, ist die Einbuchtung 30 leicht vertieft.

Die Einbuchtung 30 ist entlang der gesamten Umfangsbefestigung 20 so tief, daß die größte laterale Ausdehnung 1 des aufgeblasenen Gassacks 10 in der radialen Richtung r, senkrecht zu seiner Tiefe h, durch Abschnitte 31 der Oberseite 12 bzw. der Unterseite 14 gebildet ist, während die Umfangsbefestigung 20 und der möglicherweise gebildete Wulst relativ dazu ins Innere des Gassacks 10 versetzt liegen.

Im hier gezeigten Beispiel wird der Gassack gefertigt, indem die Fangbandvorrichtungen 22, 24 zwischen die Oberseite 12 und die Unterseite 14 gelegt werden, und der Rand der Oberseite 12 und der Unterseite 14 zusammen mit den Endabschnitten 22c und 24c der Fangbandvorrichtungen 22, 24 entlang des Umfangs der Oberseite 12 und der Unterseite 14 mittels Nähten, die die Umfangsbefestigung 20 bilden, verbunden werden. Der Gassack 10 wird danach nicht durch den Einblasmund 18 umgestülpt, so daß die Ränder der Oberseite 12 und der Unterseite 14 sowie die Umfangsbefestigung 20 nach wie vor an der Außenseite des Gassacks liegen. Da bei aufgeblasenem Gassack diese Ränder und die Umfangsbefestigung aber in der Einbuchtung 30 sozusagen verschwinden und von Bereichen 31 der Oberseite 12 und der Unterseite 14 abgedeckt sind, kommt ein Fahrzeuginsasse nicht in Kontakt damit.

Die auf den Gassack 10 und vor allem auf die Umfangsbefestigung 20 wirkenden Zugkräfte F₂ werden von den durch die Fangbandvorrichtungen 22, 24 aufgenommenen Kräften F₁ überlagert. Hierdurch kommt es zu einer Kraftresultierenden, die deutlich ins Innere des Gassacks 10 gerichtet ist.

Diese Kraftresultierende bleibt auch bestehen, wenn, wie in Figur 2 gezeigt, ein Fahrzeuginsasse 16 auf die Oberseite 12 des Gassacks auftrifft. Durch den Aufprall verringert sich die Tiefe des Gassacks 10, so daß seine Tiefe h' kleiner ist als die Tiefe h im voll aufgeblasenen Zustand. Aufgrund der Scherenwirkung der Fangbandvorrichtungen 22, 24 gibt der Gassack in radialer Richtung r nach, so daß die laterale Ausdehnung 1' größer ist als die laterale Ausdehnung 1 im voll aufgeblasenen Zustand, wie er in Figur 1 gezeigt ist. Durch diese Formveränderung verändert sich das Volumen des Gassacks 10 kaum, und der Innendruck p des Gassacks bleibt einigermaßen konstant.

Da ein Großteil der wirkenden Zugkräfte von den Fangbandvorrichtungen 22, 24 und nicht von der Umfangsbefestigung 20 aufgenommen werden, wird diese auch im Moment des Aufpralls des Fahrzeuginsassen entlastet.

Auch in dem in Figur 2 gezeigten Zustand bleibt die Einbuchtung 30 soweit erhalten, daß die Umfangsbefestigung 20 durch die Bereiche 31 der Oberseite 12 bzw. die Unterseite 14 verdeckt ist.

Natürlich kann auch eine andere Anzahl von Armen 22b, 24b eingesetzt werden, als in Figur 3 gezeigt ist.

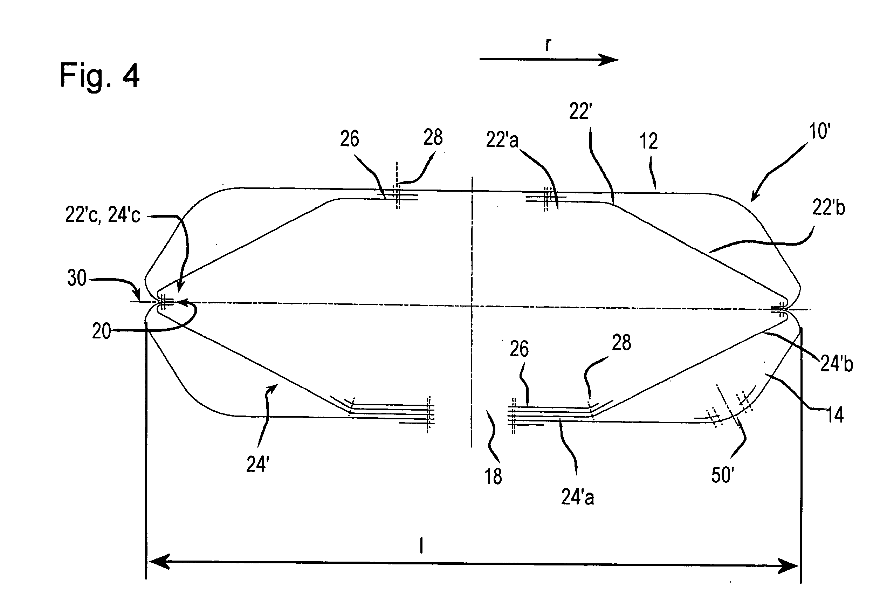

Die in Figur 4 gezeigte Ausführungsform stellt eine Variante des gerade beschriebenen Gassacks 10 dar. Im Unterschied hierzu ist der Mittelteil 22'a der Fangbandvorrichtung 22', die ebenso wie oben beschrieben im Gassack 10' angeordnet ist, entweder ringförmig gestaltet, d.h. mit einer innenliegenden Ausnehmung versehen, oder die Fangbandvorrichtung 22' besteht aus mehreren, einzelnen Abschnitten. Das Mittelteil 22'a ist über eine zusätzliche, zwischen der Oberseite 12 des Gassacks 10' und dem Mittelteil 22'a liegenden Verstärkungslage 26 an der Oberseite 12 des Gassacks 10' befestigt. Hierzu werden eine oder mehrere Nähte 28 verwendet. Die Befestigung der Verstärkungslage 26 kann z.B. nur an der Oberseite 12 des Gassacks 10' erfolgen.

In der Unterseite 14 des Gassacks 10' ist optional eine Ausströmöffnung 50' vorgesehen.

Im Gegensatz zur oben beschriebenen Ausführungsform ist der Gassack 10' "auf links" genäht und dann "auf rechts" gezogen, so daß die Umfangsbefestigung 20 im Inneren des Gassacks 10' liegt. Die beschriebenen Wirkungen und Vorteile sind in dieser Variante jedoch die gleichen.

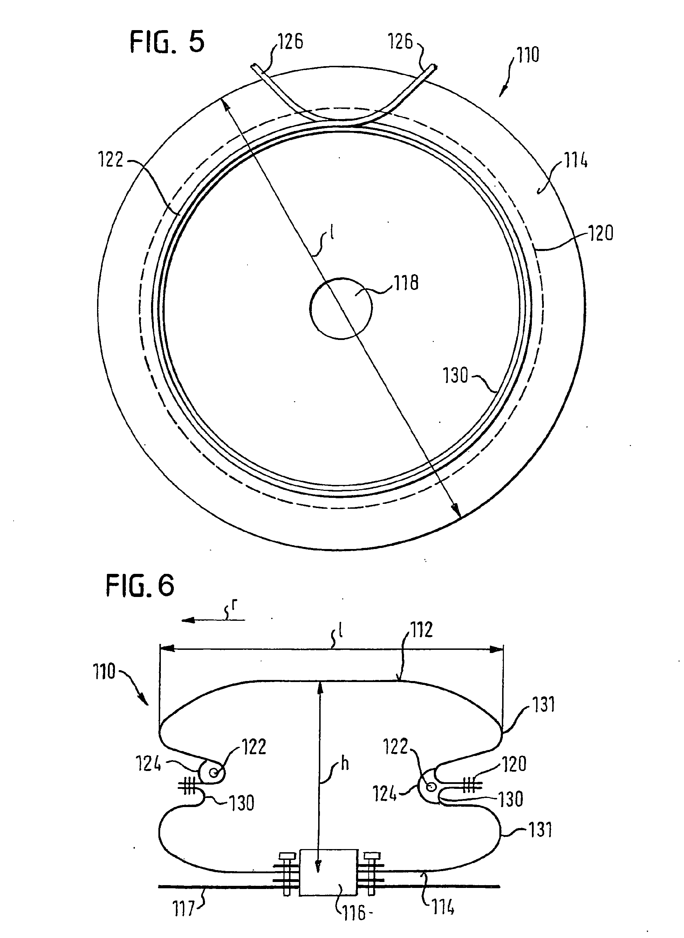

In der in den Figuren 5 bis 7 dargestellten Ausführungsform wird die Verringerung der Belastung der Umfangsbefestigung auf andere Weise erreicht.

Die Figuren 5 und 6 zeigen einen Gassack 110, mit einer Oberseite 112 und einer Unterseite 114, die, wie in der vorher beschriebenen Ausführungsform, jeweils aus einer im wesentlichen kreisförmigen Gewebelage bestehen und die entlang ihres Umfangsrandes durch eine Umfangsbefestigung 120 aneinander fixiert sind. Die Umfangsbefestigung 120 kann z.B. aus einer oder mehreren Nähten oder einer Verklebung der Ränder der Oberseite 112 und der Unterseite 114 aneinander bestehen.

In der Mitte der Unterseite 114 weist der Gassack 110 einen Einblasmund 118 auf, über den der Gassack auch auf bekannte Weise in einem Gassackmodul mit einem Gasgenerator 116 und einem Generatorträger 117, die in Figur 6 schematisch gezeigt sind, befestigt ist.

Im Bereich der Umfangsbefestigung 120 ist ein ringförmiges Verstärkungselement 122 angeordnet, das in oder nahe der Ebene der Umfangsbefestigung 120 umfangsmäßig geschlossen auf der Außenseite des Gassacks umläuft. Das Verstärkungselement 122 ist z.B. ein Band oder eine Schnur.

In der in der linken Seite der Figur 6 gezeigten Variante verläuft das Verstärkungselement 122 entlang der Außenseite des Gassacks 110, in einer oder mehreren Führungen 124, die mit der Wand des Gassacks 110 verbunden sind. In der oder den Führungen 124 ist das Verstärkungselement 122 so gehalten, daß es sich relativ zu den Führungen 124 und relativ zur Gassackwand verschieben kann.

Bei der in der rechten Hälfte der Figur 6 gezeigten Variante verläuft das Verstärkungselement 122 im Inneren des Gassacks 110, ebenfalls in einer oder mehreren Führungen 124, die mit der Wand des Gassacks 110 verbunden sind. Auch hier ist das Verstärkungselement 122 relativ zu der oder den Führungen 124 verschieblich.

Die Führungen 124 können z.B. durch eine auf einer oder auf beiden Seiten der Umfangsbefestigung 120 mit der Gassackwand verbundenen Gewebelage gebildet sein.

Die Umfangslänge des ringförmigen Verstärkungselements 122, die durch den Abschnitt des Verstärkungselements 122 definiert ist, der den Gassack 110 einschnürt, ist kürzer als die Umfangslänge der Umfangsbefestigung 120. Dies führt dazu, daß im voll aufgeblasenen Zustand, der in den Figuren 5 und 6 gezeigt ist, der Gassack 110 im Bereich der Umfangsbefestigung 120 durch das Verstärkungselement 122 eingeschnürt ist, so daß im Bereich der Umfangsbefestigung 120 eine Einbuchtung 130 ausgebildet ist. Die Erstreckung der Einbuchtung 130 in das Gassackinnere hinein ist in Figur 5 mit dem innerhalb des Verstärkungselements 122 liegenden Kreis angedeutet.

Die Einbuchtung 130 ist so tief, daß die Umfangsbefestigung 120 so weit zum Mittelpunkt des Gassacks 110 gezogen ist, daß sie von Bereichen 131 der Oberseite 112 bzw. der Unterseite 114 verdeckt ist. Ein Fahrzeuginsasse kommt also nicht mit der Umfangsbefestigung 120 oder den Rändern der Oberseite 112 oder der Unterseite 114 des Gassacks 110 in Kontakt. Dies ist selbst dann der Fall, wenn, wie im hier gezeigten Beispiel, der Gassack auf rechts genäht ist, so daß die Ränder der Oberseite 112 und der Unterseite 114 sowie die Umfangsbefestigung 120 an der Außenseite des Gassacks liegen. Sowohl im voll aufgeblasenen Zustand als auch in dem Moment, in dem der Fahrzeuginsasse auf den Gassack 110 aufprallt, ist die größte laterale Ausdehnung 1 des Gassacks 110 in radialer Richtung r größer als der Durchmesser des Gassacks 110 im Bereich der Umfangsbefestigung 120, wie dies auch in Figur 5 dargestellt ist.

Das Verstärkungselement 122 weist nur eine geringe Eigenelastizität auf, so daß die Einbuchtung 130 des Gassacks 110 stets vorhanden ist. Die Stabilität des Verstärkungselements 122 ist so gewählt, daß auch beim Aufprall des Insassen in den Gassack 110 das Verstärkungselement 122 nicht reißt oder sich vom Gassack löst.

Da der Umfang des Verstärkungselements 122 kleiner ist als der Umfang der Umfangsbefestigung 120, wird ein Teil der Kräfte vom Verstärkungselement 122 aufgenommen und so die Belastung auf die Umfangsbefestigung 120 reduziert. Ein Aufweiten der Nahtstiche der Umfangsbefestigung 120, falls diese durch eine Naht gebildet ist, wird daher vermieden.

Das Verstärkungselement 122 läßt sich einfach bilden, indem die Enden 126 einer Schnur oder eines Bandes durch Verknoten, Vernähen, Verkleben oder eine andere geeignete Weise zu einem Ring verbunden werden, wie in Figur 5 angedeutet ist. Die Länge der Enden 126 ist natürlich nicht zu berücksichtigen, wenn die Umfangslänge des Verstärkungselements 122 betrachtet wird.

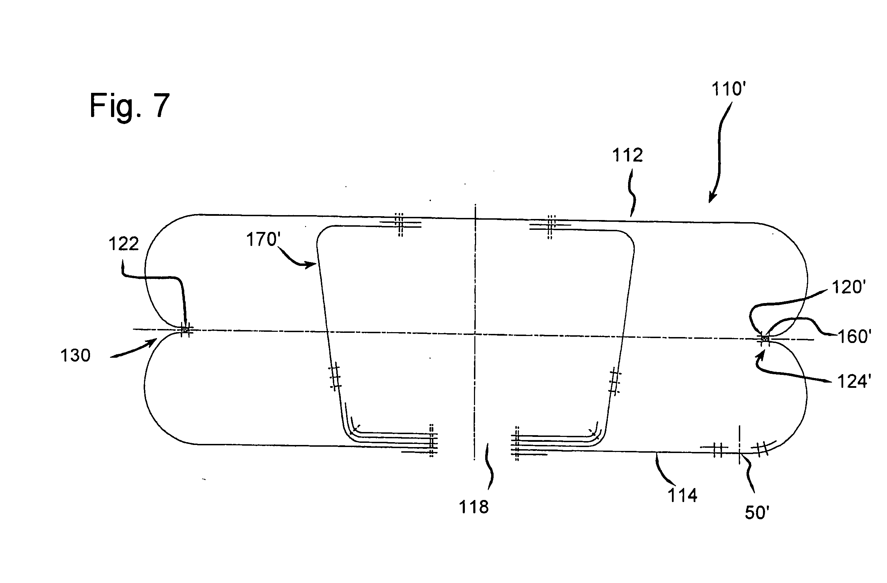

Auch wenn in den Ausführungsformen nach Figur 5 und 6 "auf rechts" genähte Gassäcke gezeigt sind, läßt sich die Erfindung dennoch auch für "auf links" genähte und dann "auf rechts" gezogene Gassäcke übertragen. Figur 7 zeigt eine Variante des gerade beschriebenen Gassacks 110. Der hier gezeigte Gassack 110' ist ebenfalls durch ein Verstärkungselement 122 in der Ebene der Umfangsbefestigung 120' eingeschnürt, so daß der aufgeblasene Gassack 110' eine Einbuchtung 130 aufweist. Das Verstärkungselement 122 verläuft im Bereich der Umfangsbefestigung 120' in einer Führung 124', die zwischen der Umfangsbefestigung 120' und z.B. einer Naht 160' oder einer Verklebung gebildet ist, die radial innerhalb oder außerhalb der Umfangsbefestigung 120' liegen kann. Das Verstärkungselement 122 kann sich in der Führung 124' in Umfangsrichtung gegenüber dem Gassack 110' bewegen. Die Naht 160' kann umlaufend geschlossen oder nur segmentweise ausgeführt sein.

Auch der Gassack 110' kann optional eine Ausströmöffnung 50' aufweisen.

Im Gegensatz zu den in Figur 6 gezeigten Varianten ist der Gassack 110' "auf links" genäht und dann "auf rechts" gezogen, so daß die Umfangsbefestigung 120' und auch das Verstärkungselement 122 im Inneren des Gassacks 110' angeordnet sind.

Zusätzlich zu der durch das Verstärkungselement 122 erreichten Einbuchtung 130 ist der Gassack 110' noch mit einer Fangbandvorrichtung 170' versehen, die sich zwischen der Unterseite 114 und der Oberseite 112 des Gassacks 110' erstreckt. Im Gegensatz zu der ersten beschriebenen Ausführungsform ist die Fangbandvorrichtung 170' jedoch nicht im Bereich der Umfangsbefestigung 120', sondern lediglich im Bereich des Einblasmundes 118 sowie an der diesem gegenüberliegenden Mittelteil der Oberseite 112 fixiert. Die Fangbandvorrichtung 170' kann aus zwei einzelnen Elementen bestehen, die jeweils mehrere Arme aufweisen, wobei die Arme der einzelnen Elemente über Nähte miteinander verbunden sind.

Die Ausführungsformen nach den Figuren 1 bis 3 lassen sich auch mit denen nach den Figuren 5 bis 7 kombinieren.

Weder die Fangbandvorrichtungen 22, 24, 22', 24' noch die Verstärkungselemente 122, 122' reißen oder verlängern sich während des Aufblasens des Gassacks 10, 10', 110, 110' oder beim Eintauchen des Fahrzeuginsassen in den Gassack.

## Patentansprüche

1. Gassack für ein Fahrzeuginsassen-Rückhaltesystem,
mit einer Oberseite (12) und einer Unterseite (14),
die entlang einer Umfangsbefestigung (20) miteinander verbunden sind,
und zwei im Inneren des Gassacks (10) angeordneten Fangbandvorrichtungen (22, 24; 22', 24'), die jeweils einen Mittelteil (22a, 24a, 22'a, 24'a) und mehrere Endabschnitte (22c, 24c; 22'c, 24'c) aufweisen,
wobei der Mittelteil (22a; 22'a) der ersten Fangbandvorrichtung (22; 22') mit der Oberseite (12) des Gassacks (10),
der Mittelteil (24a; 24'a) der zweiten Fangbandvorrichtung (24; 24') mit der Unterseite (14) des Gassacks (10) und
die Endabschnitte (22c, 24c; 22'c, 24'c) der Fangbandvorrichtungen (22, 24; 22', 24') mit der Umfangsbefestigung (20) verbunden sind, und
wobei Länge und Anordnung der Fangbandvorrichtungen (22, 24; 22', 24') so abgestimmt sind, daß der Gassack (10) im voll aufgeblasenen Zustand im Bereich der Umfangsbefestigung (20) durch die Fangbandvorrichtungen eingeschnürt ist.

2. Gassack nach Anspruch 1, **dadurch gekennzeichnet, daß** im Bereich der Umfangsbefestigung (20) eine Einbuchtung (30) ausgebildet ist, die so tief ist, daß in radialer Richtung (r) Bereiche (31) der Oberseite (12) weiter hervorstehen als die Umfangsbefestigung (20).

3. Gassack nach einem der vorhergehenden Ansprüche, **dadurch gekennzeichnet, daß** die Endabschnitte (22c, 24c; 22'c, 24'c) der beiden Fangbandvorrichtungen (22, 24; 22', 24') zueinander umfangsmäßig versetzt an der Umfangsbefestigung (20) angreifen.

4. Gassack nach einem der vorhergehenden Ansprüche, **dadurch gekennzeichnet, daß** die Endabschnitte (22c, 24c; 22'c, 24'c) der Fangbandvorrichtungen (22, 24; 22', 24') umfangsmäßig mit gleichen Winkelabständen an der Umfangsbefestigung (20) angeordnet sind.

5. Gassack nach einem der vorhergehenden Ansprüche, **dadurch gekennzeichnet, daß** die erste und/oder die zweite Fangbandvorrichtung (22, 24; 22', 24') jeweils einstückig ausgebildet sind.

6. Gassack nach einem der vorhergehenden Ansprüche, **dadurch gekennzeichnet, daß** die erste und/oder das zweite Fangbandvorrichtung (22, 24; 22', 24') jeweils aus einer Gewebelage bestehen.

7. Gassack für ein Fahrzeuginsassen-Rückhaltesystem, insbesondere nach einem der vorhergehenden Ansprüche,
mit einer Oberseite (112) und einer Unterseite (114),
die entlang einer Umfangsbefestigung (120; 120') miteinander verbunden sind,
und einem umfangsmäßig am Gassack umlaufenden Verstärkungselement (122), das im Bereich der Umfangsbefestigung (120; 120') angeordnet ist,
wobei eine Umfangslänge des Verstärkungselements (122) kürzer ist als die Umfangslänge der Umfangsbefestigung (120; 120'), so daß der Gassack (110; 110') im voll aufgeblasenen Zustand im Bereich der Umfangsbefestigung (120; 120') durch das Verstärkungselement (122) eingeschnürt ist.

8. Gassack nach Anspruch 7, **dadurch gekennzeichnet, daß** im Bereich der Umfangsbefestigung (120; 120') eine Einbuchtung (130) ausgebildet ist, die so tief ist, daß in radialer Richtung (r) Bereiche (131) der Oberseite (112) weiter hervorstehen als die Umfangsbefestigung (120; 120').

9. Gassack nach einem der Ansprüche 7 und 8, **dadurch gekennzeichnet, daß** das Verstärkungselement (122) im Inneren des Gassacks (110) angeordnet ist.

10. Gassack nach einem der Ansprüche 7 und 8, **dadurch gekennzeichnet, daß** das Verstärkungselement (122) an einer Außenseite des Gassacks (110) angeordnet ist.

11. Gassack nach einem der Ansprüche 7 bis 10, **dadurch gekennzeichnet, daß** das Verstärkungselement (122) eine Schnur oder ein Band ist.

12. Gassack nach einem der Ansprüche 7 bis 11, **dadurch gekennzeichnet, daß** das Verstärkungselement (122) in einer Führung (124; 124') verläuft.
